# EUROPÄISCHE PATENTSCHRIFT

(11) **EP 0 924 161 B1**
(45) Veröffentlichungstag und Bekanntmachung des Hinweises auf die Patenterteilung: **05.03.2003**
(21) Anmeldenummer: 98121341.6
(22) Anmeldetag: 10.11.1998
(51) Int. Cl.: C01B 3/32, C01B 3/38, C01B 3/50, H01M 8/06

(54) **Verfahren zum Betrieb einer Wasserdampfreformierungsanlage, damit betreibbare Reformierungsanlage und Brennstoffzellensystembetriebsverfahren**
Process for operating a steam reformer, reformer using this process and process for operating a fuel cells system
Procédé de fonctionnement d'un dispositif de reformage à la vapeur, dispositif de reformage utilisant ce procédé et procédé de fonctionnement d'un système de piles à combustible

(30) Priorität: 16.12.1997 DE 19755813
(43) Veröffentlichungstag der Anmeldung: 23.06.1999
(73) Patentinhaber: Ballard Power Systems AG, 73230 Kirchheim / Teck-Nabern (DE)
(72) Erfinder: Autenrieth, Rainer, 89155 Erbach (DE); Boneberg, Stefan, 89134 Blaustein (DE); Poschmann, Thomas, 89073 Ulm (DE); Schüssler, Martin, 89077 Ulm (DE); Wieland, Steffen, 70180 Stuttgart (DE)
(74) Vertreter: Beyer, Andreas, Dr.

(56) Entgegenhaltungen:
- DE-A- 4 423 587
- US-A- 5 248 566
- US-A- 5 674 301
- PATENT ABSTRACTS OF JAPAN vol. 096, no. 004, 30. April 1996 (1996-04-30) & JP 07 315801 A (NGK INSULATORS LTD), 5. Dezember 1995 (1995-12-05) & US 5 897 970 A (MANABU ISOMURA, TAKAO SOMA, TOMONORI TAKAHASHI) 27. April 1999 (1999-04-27)
- PATENT ABSTRACTS OF JAPAN vol. 015, no. 500 (C-0895), 18. Dezember 1991 (1991-12-18) & JP 03 218902 A (MITSUBISHI HEAVY IND LTD), 26. September 1991 (1991-09-26)

## Beschreibung

Die Erfindung bezieht sich auf ein Verfahren zum Betrieb einer Anlage zur Wasserdampfreformierung eines Kohlenwasserstoffs nach dem Oberbegriff des Anspruchs 1, auf eine nach diesem Verfahren betreibbare Reformierungsanlage nach dem Oberbegriff des Anspruches 10, insbesondere auf ein Verfahren zum Betrieb einer mobilen Anlage zur Wasserdampfreformierung von Methanol in einem brennstoffzellenbetriebenen Kraftfahrzeug zur Bereitstellung des für die Brennstoffzellen benötigten Wasserstoffs und auf eine dergestalt betreibbare Anlage, sowie auf ein Betriebsverfahren eines entsprechenden Brennstoffzellensystems. Unter dem Begriff Kohlenwasserstoff sollen dabei vorliegend neben eigentlichen Kohlenwasserstoffen der Einfachkeit halber auch im weiteren Sinne Derivate derselben verstanden werden, wie Methanol.

Die Wasserstoffabtrennstufe dient bei einer solchen Anlage mit ihrer selektiv wasserstoffdurchlässigen Membran dazu, den im warmgelaufenen Betrieb durch die Reformierungsreaktion erzeugten Wasserstoff von den übrigen Bestandteilen des gebildeten Reformatgases abzutrennen. Dies stellt neben alternativen Vorgehensweisen, wie CO-Umsetzung zu Kohlendioxid über eine CO-Oxidation oder die sogenannte CO-Shiftreaktion, eine Methode dar, ein im wesentlichen aus Wasserstoff bestehendes Produktgas zu erhalten, in welchem die CO-Konzentration einen bestimmten, geringen Schwellwert nicht überschreitet. Dies ist zum Beispiel beim Einsatz des Produktgases als Anodengas eines Brennstoffzellensystems von Bedeutung, da dort das Kohlenmonoxid als Katalysatorgift wirkt. Die Wasserstoffabtrennstufe kann als separate Einheit dem Reformierungsreaktor nachgeschaltet oder in den Reformierungsreaktor integriert sein.
Bekanntermaßen verläuft die Wasserdampfreformierungsreaktion zur Reformierung eines Kohlenwasserstoffs oder Kohlenwasserstoffderivats, wie Methanol, endotherm und bei einer gegenüber Raumtemperatur erhöhten Reaktionstemperatur. Bei einem Kaltstart der Anlage kann daher mit der Wasserdampfreformierungsreaktion nicht sofort Wasserstoff bereitgestellt werden, vielmehr müssen zunächst die Anlagenteile auf eine entsprechende Betriebstemperatur gebracht werden. Gerade im Anwendungsfall von Kraftfahrzeugen besteht jedoch der Wunsch, nach Auslösen eines Startvorgangs des Fahrzeuges und damit auch der Reformierungsanlage möglichst unverzüglich Antriebsleistung durch die Brennstoffzellen zur Verfügung zu haben, was wiederum erfordert, daß die Reformierungsanlage möglichst schnell und mit möglichst geringem Aufwand Wasserstoff bereitzustellen vermag. Hierzu wurden bereits verschiedentlich spezielle Maßnahmen für den Kaltstart von Reformierungsanlagen vorgeschlagen.

So ist es aus den Patentschriften FR 1.417.757 und FR 1.417.758 bekannt, bei einem Kaltstart einer Anlage zur Wasserdampfreformierung von Methanol zunächst ein Gemisch aus Methanol und einem Oxidationsmittel in den Reformierungsreaktor einzuleiten, um dort eine entsprechende Verbrennungsreaktion durchzuführen und damit den Reaktor aufzuheizen. Danach wird die Zufuhr des Oxidationsmittels beendet und stattdessen das zu reformierende Methanol/Wasserdampf-Gemisch zugeführt und die Wasserdampfreformierungsreaktion gestartet. Bei der Anlage der FR 1.417.757 steht mit dem Reformierungsreaktionsraum ein Heizraum in Wärmekontakt, in welchem das nicht durch eine Abtrennmembran diffundierte Restgas aus dem Reaktionsraum nichtkatalytisch mit Sauerstoff verbrannt wird. Eine analoge Maßnahme ist in der Offenlegungsschrift JP 4-321502 (A) beschrieben

Aus der Patentschrift DE 44 23 587 C2 ist es bekannt, in einem mit geeignetem Katalysatormaterial, z.B. Cu/ZnO-Material, befüllten Reformierungsreaktor je nach Steuerung der Zuführung der einzelnen Reaktionspartner in den Reaktor und der dort herrschenden Temperatur Wasserstoff wahlweise mittels exothermer partieller Oxidation und/oder endothermer Wasserdampfreformierung von Methanol zu gewinnen. Bei geeigneter Prozeßführung laufen die beiden Reaktionen parallel ab, wobei ein autothermer Reaktionsablauf einstellbar ist.

Es ist des weiteren bekannt, das anodenseitige Abgas eines von einer Reformierungsanlage mit Wasserstoff gespeisten Brennstoffzellensystems direkt oder nach Zwischenspeicherung zur Beheizung des Reformierungsreaktors zu nutzen, siehe z.B. die Offenlegungsschriften JP 4-338101 (A), JP 4-160003 (A) und JP 2-160602 (A), im Fall der JP 4-338101 (A) speziell zum Starten des Systems und in den Fällen der JP 4-160003 (A) und JP 2-160602 (A) unter ergänzender Wärmeerzeugung durch eine partielle Oxidationsreaktion zusätzlich zur Reformierungsreaktion im Reformierungsreaktionsraum.

Bei einem in der Patentschrift US 5.248.566 beschriebenen Brennstoffzellensystem, dessen Brennstoffzellen anodenseitig von Wasserstoff gespeist werden, der von einem partiell oxidierenden Reformierungsreaktor erzeugt wird, wird das Anodenabgas der Brennstoffzellen in einem Nachbrenner unter Luftzufuhr verbrannt. Die dadurch erzeugte Wärme wird zur Heizung des Innenraums eines Kraftfahrzeuges verwendet, das mit dem Brennstoffzellensystem ausgerüstet ist.

Spezielle Kaltstartmaßnahmen wurden auch für Anlagen zur Wasserdampfreformierung eines Kohlenwasserstoffs ohne Verwendung einer Wasserstoffabtrennstufe vorgeschlagen. So beschreiben die Patentschriften US 4.820.594 und US 5.110.559 Anlagen zur Wasserdampfreformierung eines Kohlenwasserstoffs, bei denen im Reformierungsreaktor ein Brenner integriert ist, der mit dem Reaktionsraum des Reaktors über eine wärmeleitende Trennwand in Wärmekontakt steht. Beim Kaltstart wird in diesem Brenner ein brennbares Gemisch bei offener Flamme verbrannt, das im Fall der US 5.110.559 aus dem Reformierungsreaktor selbst stammt, wobei dem Reaktionsraum schon beim Kaltstart der zu reformierende, brennbare Kohlenwasserstoff zugeführt wird. Die heißen Verbrennungsabgase des in den Reaktor integrierten Brenners werden in einen nachgeschalteten CO-Shiftkonverter geleitet, um diesen damit aufzuheizen und auf diese Weise die Anlage schneller auf Betriebstemperatur zu bringen.

Bei Verwendung des Prozesses der partiellen Oxidation des Kohlenwasserstoffs, d.h. des sogenannten POX-Prozesses, im Zusammenhang mit der Verwendung einer selektiv wasserstoffabtrennenden Membran besteht allgemein die Schwierigkeit, daß an der Membran ein ausreichend hoher Betriebsdruck von typischerweise über 10bar zur Erzielung eines ausreichenden Wasserstoffdiffusionsvermögens nötig ist und gleichzeitig der POX-Prozeß ein sauerstoffhaltiges Gas, z.B. Luft, benötigt, das folglich auf den Membranbetriebsdruck komprimiert werden muß, was mit entsprechend hohem Aufwand verknüpft ist.

Der Erfindung liegt als technisches Problem die Bereitstellung eines Verfahrens und einer Anlage zur Wasserdampfreformierung sowie eines Brennstoffzellensystem-Betriebsverfahrens der eingangs genannten Art zugrunde, bei denen die Anlagenkomponenten mit relativ geringem Aufwand bei einem Kaltstart möglichst rasch ihre Betriebstemperatur erreichen, so daß entsprechend schnell Wasserstoff bereitgestellt und ggf. in Brennstoffzellen genutzt werden kann.

Die Erfindung löst dieses Problem durch Bereitstellung eines Wasserdampfreformierungsverfahrens mit den Merkmalen des Anspruches 1, eines Brennstoffzellensystem-Betriebsverfahrens mit den Merkmalen des Anspruchs 9 sowie einer Reformierungsanlage mit den Merkmalen des Anspruches 10.

Durch das Verfahren nach Anspruch 1 kann beispielsweise die Reformierungsanlage nach Anspruch 10 bei einem Kaltstart ohne großen Aufwand vergleichsweise rasch auf ihren normalen, warmgelaufenen Betriebszustand gebracht werden, indem ein Aufheizvorgang durchgeführt wird, bei dem zunächst der sowohl auf POX-Betrieb als auch auf Wasserdampfreformierungsbetrieb ausgelegte Reformierungsreaktor im POX-Betrieb bei relativ niedrigem Druck gefahren wird. Der exotherme POX-Prozeß erzeugt Wärme, die je nach Systemaufbau über direkte Festkörperwärmeleitung und/oder durch das bei der partiellen Oxidation gebildete Produktgas als Wärmeträgermedium in die Wasserstoffabtrennstufe transportiert wird und dort die Membran heizt. Das aus dem Reaktor austretende Produktgas, das aufgrund der stattfindenden partiellen Oxidation des Kohlenwasserstoffs bereits wasserstoffhaltig ist, wird dann von der Wasserstoffabtrennstufe zur katalytischen Brennereinrichtung weitergeleitet und dort katalytisch verbrannt. Da die Brennereinrichtung wenigstens mit der Verdampfer und dem Reformierungsreaktor in Wärmekontakt steht, werden auch diese Anlagenkomponenten rasch aufgeheizt. Zwar können unterstützende Aufheizmaßnahmen vorgesehen sein, wie elektrische Beheizung von Verdampfer, Reformierungsreaktor und/oder Wasserstoffabtrennstufe oder direkte Einspeisung eines katalytisch brennbaren Gemischs in die katalytische Brennereinrichtung, dies ist jedoch nicht zwingend erforderlich.

Sobald wenigstens der Reformierungsreaktor eine vorgebbare Temperatur erreicht hat, die mindestens der im späteren Normalbetrieb während der Wasserdampfreformierung verwendeten Normalbetriebstemperatur entspricht, wird in einer zweiten Betriebsphase des Aufheizvorgangs der POX-Prozeß gestoppt und das System auf den für die wasserstoffabtrennende Membran benötigten Normalbetriebsdruck von z.B. zwischen 10bar und 40bar hochgefahren. Gleichzeitig wird damit begonnen, Wasser und den zu reformierenden Kohlenwasserstoff in den Verdampfer einzuspeisen und dort zu verdampfen, um das entstehende Gemisch dem Reaktor zuzuführen und dort den Kohlenwasserstoff zu reformieren. Mit dem erhöhten Betriebsdruck und kontinuierlich steigender Membrantemperatur wird die Membran zunehmend für Wasserstoff durchlässig. Beim Einsatz in einem brennstoffzellenbetriebenen Kraftfahrzeug kann von der Anlage daher zu diesem Zeitpunkt bereits so viel Wasserstoff geliefert werden, daß mit diesem ein eingeschränkter Fahrbetrieb mit der Leistung des Brennstoffzellensystems möglich ist.

Bei einem nach Anspruch 2 weitergebildeten Verfahren wird die Membran nicht nur mittels des durch die Wasserstoffabtrennstufe hindurchgeleiteten Produktgases, sondern zusätzlich durch eine in der Wasserstoffabtrennstufe selbst oder einem mit ihr in Wärmekontakt stehenden Teil der katalytischen Brennereinrichtung aktivierte katalytische Verbrennung aufgeheizt. Dadurch erreicht die Membran noch schneller ihre Normalbetriebstemperatur. Dieses Verfahren eignet sich inbesondere zum Betrieb der nach Anspruch 11 weitergebildeten Anlage.

Bei einem nach Anspruch 3 weitergebildeten Verfahren wird dem Reformierungsreaktor zu Beginn der ersten Betriebsphase kurzzeitig elektrisch erzeugte Wärme zugeführt, was ein rasches Starten des POX-Betriebes des Reaktors unterstützt.

Bei einem nach Anspruch 4 weitergebildeten Verfahren wird in der ersten Betriebsphase des Aufheizvorganges das Verbrennungsabgas der katalytischen Brennereinrichtung durch den Verdampfer und/oder die Membran geleitet, so daß diese Komponenten noch schneller aufgeheizt werden und ihre normale Betriebstemperatur erreichen. Die zusätzliche Membranaufheizung ist insbesondere mit der nach Anspruch 12 weitergebildeten Anlage realisierbar.

Bei einem nach Anspruch 5 weitergebildeten Verfahren wird während des Aufheizvorgangs in die katalytische Brennereinrichtung direkt derselbe Kohlenwasserstoff, der anschließend reformiert wird, zwecks katalytischer Verbrennung eingespeist. Dadurch ist die katalytische Brennereinrichtung in der Lage, den Reformierungsreaktor und/oder den Verdampfer und/oder die Wasserstoffabtrennstufe auch in den Zeiträumen wirksam zu heizen, in denen noch keine entsprechend große Wasserstoffmenge aus dem POX-Betrieb des Reformierungsreaktors in die katalytische Brennereinrichtung gelangt, z.B. weil noch nicht ausreichend viel Wasserstoff erzeugt wird oder weil bereits merkliche Wasserstoffmengen durch die Membran hindurchdiffundieren und anderweitig genutzt werden.

Bei einem nach Anspruch 6 weitergebildeten Verfahren kann über wenigstens eine Zwischeneinspeisungsleitung bzw. Brennstoffspeiseleitung Wasser vor dem Reformierungsreaktor und/oder vor der Wasserstoffabtrennstufe und/oder in die katalytische Brennereinrichtung zudosiert werden, um als Wärmetransportmedium zu fungieren und gleichzeitig Überhitzungen zu vermeiden.

Ein nach Anspruch 7 weitergebildetes Verfahren eignet sich für eine Anlage mit mehrteiliger katalytischer Brennereinrichtung, die wenigstens einem dem Reformierungsreaktor zugeordneten und einen dem Verdampfer zugeordneten Brennerteil aufweist. Verfahrensgemäß kann in einem solchen Fall das sauerstoffhaltige Gas individuell den verschiedenen Brennerteilen zugeführt werden, so daß die chemische Verbrennungsenergie von direkt eingespeistem Brennstoff oder des aus dem Reformierungsreaktor kommenden, in die katalytische Brennereinrichtung eingespeisten Produktgases gezielt auf die einzelnen Brennerteile verteilt werden kann.

Bei einem nach Anspruch 8 weitergebildeten Verfahren werden der Verdampfer und der Reformierungsreaktor während des Aufheizvorganges auf eine Temperatur aufgeheizt, die oberhalb der Normalbetriebtemperatur bei warmgelaufener Anlage liegt, um auf diese Weise die Anlage insgesamt schneller auf Normalbetriebsbedingungen zu bringen, insbesondere die Wasserstoffabtrennstufe rascher aufheizen zu können.

Das Brennstoffzellensystem-Betriebsverfahren nach Anspruch 9 eignet sich speziell für den Einsatz in brennstoffzellenbetriebenen Kraftfahrzeugen. Bei diesem Verfahren ist vorgesehen, den durch das Reformierungsverfahren nach einem der Ansprüche 1 bis 8 erzeugten Wasserstoff als Brennstoff für die Brennstoffzellen zu verwenden und das heiße Verbrennungsabgas der katalytischen Brennereinrichtung zum Aufheizen eines Kühlkreislaufs des Brennstoffzellensystems zu nutzen.

Vorteilhafte Ausführungsformen der Erfindung sind in den Zeichnungen dargestellt und werden nachfolgend beschrieben. Hierbei zeigen:
- Fig. 1: ein Blockdiagramm einer Wasserdampfreformierungsanlage und
- Fig. 2: ein Flußdiagramm eines für die Anlage von Fig. 1 geeigneten Betriebsverfahrens.

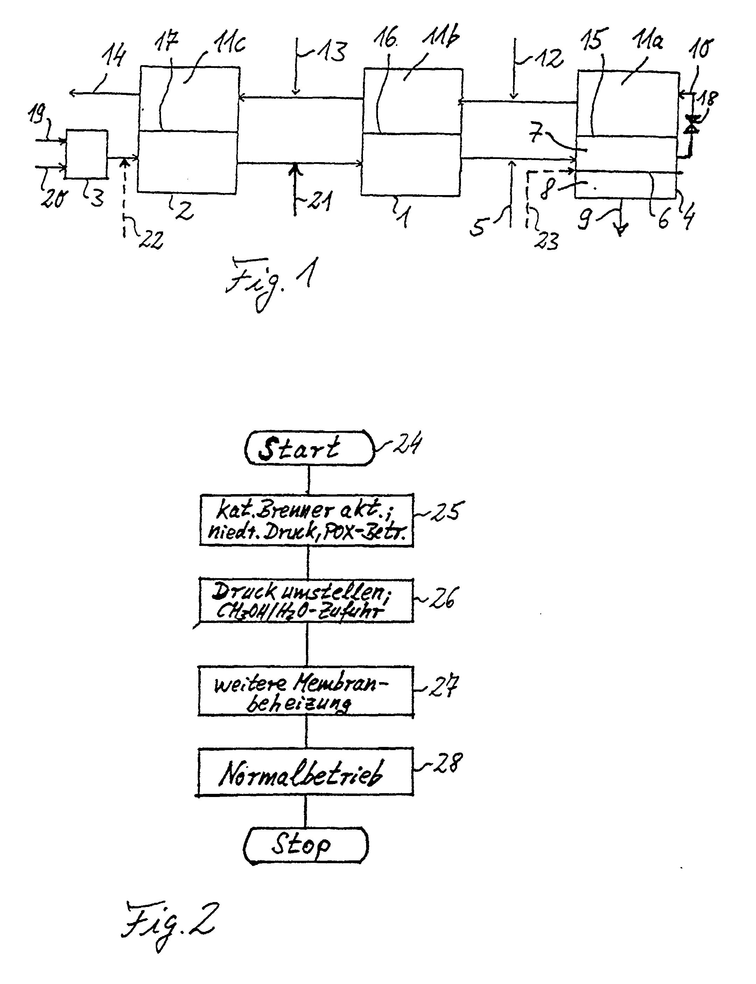

Die in Fig. 1 dargestellte Anlage eignet sich z.B. zur Wasserdampfreformierung von Methanol im mobilen Einsatz in einem brennstoffzellenbetriebenen Kraftfahrzeug, um den für die Brennstoffzellen benötigten Wasserstoff bereitzustellen. Die Anlage beinhaltet einen Reformierungsreaktor 1, der je nach den zugeführten Stoffen und den Betriebsparametern wahlweise im POX-Betrieb, in welchem ein zugeführter Kohlenwasserstoff exotherm unter Bildung von Wasserstoff partiell oxidiert wird, oder im Reformierungsbetrieb, in welchem der Kohlenwasserstoff mit Wasser endotherm zur Bildung von Wasserstoff umgesetzt wird, betreibbar ist und dazu ein geeignetes Katalysatormaterial enthält, z.B. ein Cu/ZnO-Material. Dem Reformierungsreaktor 1 ist ein Verdampfer 2 vorgeschaltet, in den mittels einer entsprechenden Dosiereinrichtung 3 Wasser und Methanol eingespeist werden können. Wasser und Methanol werden aus entsprechenden, nicht gezeigten, im Fahrzeug mitgeführten Vorratstanks in flüssiger Form entnommen und der Dosiereinrichtung 3 über zugehörige Zufuhrleitungen 19, 20 zugeführt. In die Verbindungsleitung zwischen Verdamper 2 und Reformierungsreaktor 1 mündet eine erste Zwischeneinspeisungsleitung 21. An den Reformierungsreaktor 1 schließt sich in Gasströmungsrichtung eine Wasserstoffabtrennstufe 4 an, wobei in die zugehörige Verbindungsleitung eine zweite Zwischeneinspeisungsleitung 5 mündet.

Die Wasserstoffabtrennstufe 4 beinhaltet eine selektiv wasserstoffdurchlässige Membran 6, die den Innenraum der Wasserstoffabtrennstufe 4 in einen Gasdurchtrittsraum 7 und einen Wasserstoffabzugsraum 8 unterteilt. Das eintrittsseitige, vom Reaktor 1 kommende Stoffgemisch wird über einen entsprechenden Einlaß in den Gasdurchtrittsraum 7 eingeleitet. Soweit es Wasserstoff enthält und der Betriebszustand der Membran 6 dies zuläßt, diffundiert der Wasserstoff wenigstens teilweise durch die Membran 6 hindurch in den Wasserstoffsabzugsraum 8, wo er über eine Abzugsleitung 9 entnommen und beispielsweise dem Anodenteil eines Brennstoffzellensystems zugeführt werden kann. Im übrigen verläßt das Stoffgemisch den Gasdurchtrittsraum 7 über einen entsprechenden Auslaß und gelangt in eine daran angeschlossene Brenneranschlußleitung 10. In der Brenneranschlußleitung 10 befindet sich ein Druckhalteventil 18.

Stromabwärts des Druckhalteventils 18 mündet die Brenneranschlußleitung 10 in einen ersten Teil 11a einer dreiteiligen katalytischen Brennereinrichtung 11a, 11b, 11c. Die drei Brennerteile 11a, 11b, 11c sind seriell hintereinandergeschaltet, wobei zwischen dem ersten und dem zweiten Teil 11a, 11b eine erste Brennstoffspeiseleitung 12 und zwischen dem zweiten und dritten Teil 11b, 11c eine zweite Brennstoffspeiseleitung 13 vorgesehen sind. Aus dem dritten Brennerteil 11c wird das Verbrennungsabgas über eine Abgasleitung 14 abgeführt. Optional kann vorgesehen, das Verbrennungsabgas aus der Abgasleitung 14 in eine an der Eintrittsseite des Verdampers 2 vorgesehene Heizfluidleitung 22 und/oder eine an der Eintrittsseite eines Heizkanalsystems der Wasserstoffabtrennmembran 6 vorgesehene Heizfluidleitung 23 einzuspeisen, wie in Fig. 1 gestrichelt angedeutet. Auf diese Weise kann das heiße Verbrennungsabgas durch den Verdampfer 2 und/oder durch das Heizkanalsystem der Membran 6 hindurchgeleitet werden, um den Verdampfer 2 und die Membran 6 schneller aufzuheizen. Der erste Brennerteil 11a steht über eine erste wärmeleitende Trennwand 15 mit der Wasserstoffabtrennstufe 4 in Wärmekontakt, der zweite Brennerteil 11b steht über eine zweite wärmeleitende Trennwand 16 mit dem Reformierungsreaktor 1 in Wärmekontakt, und der dritte Brennerteil 11c steht über eine dritte wärmeleitende Trennwand 17 mit dem Verdampfer 2 in Wärmekontakt.

Die solchermaßen aufgebaute Anlage kann durch ein entsprechendes Betriebsverfahren bei einem Kaltstart sehr rasch auf ihren Normalbetrieb hochgefahren werden, in welchem die Anlagenkomponenten ihren jeweiligen normalen Betriebszustand, insbesondere die zur Wasserdampfreformierung erforderliche erhöhte Temperatur und den zur im wesentlichen vollständigen Wasserstoffdiffusion durch die Membran 6 hindurch zusätzlich benötigten, erhöhten Betriebsdruck, erreicht haben. Ein vorteilhaftes, hierzu geeignetes Verfahren wird nachfolgend unter Bezugnahme auf Fig. 2 erläutert, in welcher wesentliche Schritte dieses Verfahrens veranschaulicht sind.

Nach Auslösen eines Kaltstarts 24 des Kraftfahrzeuges und damit auch der Reformierungsanlage wird ein Aufheizvorgang durchgeführt, der in einer ersten Betriebsphase 25 die Aktivierung der katalytischen Brennereinrichtung 11a, 11b, 11c und die Aktivierung des Reformierungsreaktors 1 in der POX-Betriebsart bei relativ niedrigem Systemdruck, z.B. zwischen 1bar und 10bar, beinhaltet. Zur Aktivierung des POX-Betriebs des Reformierungsreaktors 1 werden über die erste Zwischeneinspeisungsleitung 21 flüssiges, z.B. in einem Fahrzeugtank bevorratetes Methanol und Wasser sowie Luft in geeigneten Anteilen mit dem anfänglichen niedrigen Systemdruck eingespeist. Gleichzeitig werden, soweit erforderlich, flüssiges Methanol als Brennstoff und Luft als Oxidationsmittel über die beiden Brennstoffeinspeiseleitungen 12, 13 in die entsprechenden Teile 11b, 11c der katalytischen Brenneinrichtung eingespeist, wo das Methanol flammenlos katalytisch verbrannt wird. Zur Vermeidung von Überhitzungen kann zusätzlich Wasser in die Brennstoffeinspeiseleitungen 12, 13 in jeweils erforderlicher Menge eingeleitet werden. Durch den katalytischen Verbrennungsprozeß in den beiden Brennerteilen 11b, 11c werden über die jeweilige wärmeleitende Trennwand 16, 17 der Reaktor 1 und der Verdampfer 2 aufgeheizt. Zusätzlich kann insbesondere zu Beginn der ersten Betriebsphase der Start der POX-Reaktion im Reaktor 1 durch elektrisch erzeugte Wärme unterstützt werden.

Auf diese Weise ist der Reaktor 1 in der Lage, bereits nach wenigen Sekunden durch partielle Methanoloxidation ein wasserstoffhaltiges Produktgas zu liefern. Dieses wird durch den Gasdurchtrittsraum 7 der Wasserstoffabtrennstufe 4 hindurchgeleitet und heizt dort die Membran 6 auf. Wegen des niedrigen Systemdrucks wird in dieser Betriebsphase allenfalls wenig Wasserstoff von der Membran 6 abgetrennt, wobei der Wasserstoff bei Bedarf als Brennstoff in die katalytische Brennereinrichtung 11a, 11b, 11c eingespeist werden kann, um zum dortigen Verbrennungsprozeß beizutragen. Über die Brennerzufuhrleitung 10, deren Druckhalteventil 18 in dieser Betriebsphase mit niedrigem Systemdruck offen ist, gelangt das Produktgas in die katalytische Brennereinrichtung, und zwar sukzessive in die drei Brennerteile 11a, 11b, 11c, und wird dort katalytisch mit Luft verbrannt, die zu diesem Zweck zusammen mit Wasser als Überhitzungsschutz und Wärmeträgermedium über die zweite Zwischeneinspeiseleitung 5 dem aus dem Reaktor 1 kommenden Produktgas zugemischt wird. Auf diese Weise heizt die katalytische Brennereinrichtung 11a, 11b, 11c den Reaktor 1, den Verdampfer 2 und die Wasserstoffabtrennstufe 4 auf, wobei sich der Reaktor 1 zusätzlich durch die bei der partiellen Methanoloxidation entstehende Wärme aufheizt.

Je nach Anwendungsfall sind weitere unterstützende Heizmaßnahmen realisierbar. So kann bei Bedarf das heiße Verbrennungsabgas der katalytischen Brennereinrichtung 11a, 11b, 11c von der Abgasleitung 14 abgezweigt und über die entsprechenden Zufuhrleitungen 22, 23 zum Verdampfer 2 und durch diesen hindurchgeleitet und/oder zur wasserstoffabtrennenden Membran 6 und durch in ihr ggf. vorgesehene Heizkanäle hindurchgeleitet werden. Dadurch trägt das heiße Verbrennungsabgas zur Aufheizung des Verdampfers 2 und der Membran 6 bei. Außerdem kann das heiße Verbrennungsabgas im Anwendungsfall eines brennstoffzellenbetriebenen Kraftfahrzeuges dazu genutzt werden, den Kühlkreislauf eines Brennstoffzellensystems aufzuheizen. Als weitere Aufheizmaßnahme kann vorgesehen sein, das aus dem Reformierungsreaktor 1 kommende Produktgas in der Wasserstoffabtrennstufe 4 wenigstens teilweise katalytisch zu verbrennen und dadurch die Membran 6 noch schneller aufzuheizen. Bei Verwendung einer Pd-Membran ist diese bereits geeignet katalytisch aktiv, andernfalls kann ein geeignetes Katalysatormaterial als Beschichtung der Membran 6 oder an anderer Stelle des Gasdurchtrittsraums 7 z.B. als Schicht oder Schüttung vorgesehen sein.

Sobald durch die verschiedenen Heizmaßnahmen der ersten Betriebsphase 25 wenigstens der Reformierungsreaktor 1 und der Verdampfer 2 eine für beginnende Wasserdampfreformierung geeignete Betriebstemperatur erreicht haben, wird in einer anschließenden zweiten Betriebsphase 26 der POX-Prozeß gestoppt, indem die entsprechende Zufuhr der Reaktionspartner über die erste Einspeiseleitung 21 und die Niederdruck-Luftdosierung für die Membran 6 über die zweite Zwischeneinspeiseleitung 5 beendet werden. Gleichzeitig wird das Druckhalteventil 18 geschlossen, und flüssiges Methanol und Wasser werden nun von der Dosiereinrichtung 3 in den Verdampfer 2 eingespeist. Die Dosiereinrichtung 3 beinhaltet Dosierpumpen für die flüssigen Edukte Methanol und Wasser, die so ausgelegt sind, daß sie für den anschließend gewünschten erhöhten Betriebsdruck geeignet sind. Dieser erhöhte, für die Wasserstoffdiffusionsfunktion der Membran 6 benötigte Betriebsdruck beträgt typischerweise zwischen 10bar und 40bar.

Im Verdampfer 2 werden das Methanol und das Wasser zu einem Methanol/Wasserdampf-Gemisch verdampft, das als vorzugsweise überhitztes Gemisch in den Reformierungsreaktor 1 gelangt, wo das Methanol eine Wasserdampfreformierung erfährt, so daß ein wasserstoffreiches Reformatgas entsteht. Dieses gelangt zur Wasserstoffabtrennstufe 4, wo die Membran 6 mit zunehmender Temperatur und zunehmendem Membrandifferenzdruck immer wasserstoffdurchlässiger wird. Außerdem heizt das Reformatgas die Membran 6 weiter auf.

Sobald das System den erhöhten Normalbetriebsdruck erreicht hat, wird in einer dritten Betriebsphase 27 bei Normalbetriebsdruck und Normalbetriebstemperatur der übrigen Anlagenkomponenten die Membran 6 weiter erhitzt, um ihre optimale Wasserstoffdurchlässigkeit zu erreichen. In dieser dritten Betriebsphase vermag die Membran 6 bereits so viel Wasserstoff abzutrennen, daß durch diesen bei Einsatz in einem brennstoffzellenbetriebenen Kraftfahrzeug ein eingeschränkter Fahrbetrieb möglich ist.

Während des gesamten Aufheizvorganges mit den drei genannten Betriebsphasen 25, 26, 27 kann bei Bedarf zur Beschleunigung des Warmlaufvorgangs der Anlage vorgesehen sein, den Verdampfer 2 und/oder den Reformierungsreaktor 1 bei einer erhöhten Temperatur zu betreiben, die oberhalb der im späteren Normalbetrieb verwendeten Normalbetriebstemperatur liegt. Dadurch wird zwar im Reaktor 1 mehr Kohlenmonoxid gebildet, dies ist jedoch nicht weiter schädlich, da es nicht durch die Membran diffundieren kann und in der katalytischen Brennereinrichtung 11a, 11b, 11c verbrannt wird.

Sobald dann die Membran 6 ihren für eine vollständige Wasserstoffdiffusion erforderlichen Betriebszustand hinsichtlich Temperatur und Differenzdruck erreicht hat, ist der Aufheizvorgang beendet, und die Anlage geht in ihren Normalbetrieb 28 über. Die Anlage erzeugt dabei ein wasserstoffreiches Reformatgas im Reformierungsreaktor 1 aus einem zugeführten Methanol/Wasserdampf-Gemisch, und der gebildete Wasserstoff wird von den übrigen Reformatgasbestandteilen durch die Wasserstoffabtrennstufe 4 selektiv abgetrennt und kann über die Abzugsleitung 9 z.B. einem Brennstoffzellensystem zugeführt werden. Die Beheizung der einzelnen Anlagenkomponenten wird soweit beibehalten, wie dies zur Aufrechterhaltung der optimalen Betriebstemperaturen der einzelnen Komponenten erforderlich ist. Dabei kann die Luft- und/oder Brennstoffdosierung für die einzelnen Teile 11a, 11b, 11c der katalytischen Brennereinrichtung, wie auch während des Aufheizvorganges, individuell eingestellt werden, um den Reaktor 1, den Verdampfer 2 und die Wasserstoffabtrennstufe 4 auf deren jeweils optimaler Temperatur zu halten.

Die Anlage bleibt dann im Normalbetrieb 28, bis das Fahrzeug abgestellt wird. Dann kann die Anlage ebenfalls abgestellt werden (Schritt 29), da sie durch das beschriebene Verfahren zu einem späteren Zeitpunkt auch in kaltem Systemzustand rasch wieder gestartet werden kann, so daß sie in sehr kurzer Zeit Wasserstoff liefern kann, was besonders für den mobilen Anwendungsfall in brennstoffzellenbetriebenen Kraftfahrzeugen von großem Vorteil ist. Denn dadurch erübrigt sich ein größerer Wasserstoffzwischenspeicher, ohne daß die Reformierungsanlage bei abgestelltem Fahrzeug in betriebsbereitem, erwärmtem Zustand gehalten werden muß.

## Patentansprüche

1. Verfahren zum Betrieb einer Anlage zur Wasserdampfreformierung eines Kohlenwasserstoffs oder Kohlenwasserstoffderivats mit einem Verdampfer (2), einem sowohl für POX-Betrieb als auch Reformierungsbetrieb geeigneten Reformierungsreaktor (1), einer Wasserstoffabtrennstufe (4) mit selektiv wasserstoffdurchlässiger Membran (6) und einer wenigstens mit dem Verdampfer und dem Reformierungsreaktor über je eine wärmeleitende Trennwand in Wärmekontakt stehenden katalytischen Brennereinrichtung, bei dem
- bei warmgelaufener Anlage der Kohlenwasserstoff bzw. das Kohlenwasserstoffderivat im Reformierungsreaktor einer Wasserdampfreformierungsreaktion unterzogen und der im gebildeten Reformatgas enthaltene Wasserstoff in der Wasserstoffabtrennstufe bei geeignet hohem Normalbetriebsdruck und geeignet hoher Normalbetriebstemperatur von den restlichen Reformatgasbestandteilen abgetrennt wird,
**dadurch gekennzeichnet, daß**
- beim Kaltstart der Anlage ein Aufheizvorgang durchgeführt wird, bei dem in einer ersten Betriebsphase (25) bei gegenüber dem Normalbetriebsdruck geringerem Aufheizbetriebsdruck der Reformierungsreaktor (1) im POX-Betrieb zur partiellen Oxidation des Kohlenwasserstoffs bzw. Kohlenwasserstoffderivats betrieben und das entstehende Produktgas über die Wasserstoffabtrennstufe (4) in die katalytische Brennereinrichtung (11a, 11b, 11c) geleitet und dort mittels eines sauerstoffhaltigen Gases katalytisch verbrannt wird und bei dem in einer anschließenden zweiten Betriebsphase der Reformierungsreaktor auf Reformierungsbetrieb umgestellt und der Druck vom Aufheizbetriebsdruck auf den Normalbetriebsdruck angehoben wird.

2. Verfahren nach Anspruch 1, weiter
**dadurch gekennzeichnet, daß**
die Membran (6) während des Aufheizvorganges zusätzlich durch eine in der Wasserstoffabtrennstufe (4) aktivierte katalytische Verbrennung wenigstens eines Teils des durch letztere hindurchgeleiteten Produktgases oder durch einen mit ihr in Wärmekontakt stehenden Teil (11a) der katalytischen Brennereinrichtung erwärmt wird.

3. Verfahren nach Anspruch 1 oder 2, weiter
**dadurch gekennzeichnet, daß**
dem Reformierungsreaktor zu Beginn der ersten Betriebsphase zum Starten des POX-Betriebes kurzzeitig elektrisch erzeugte Wärme zugeführt wird.

4. Verfahren nach einem der Ansprüche 1 bis 3, weiter
**dadurch gekennzeichnet, daß**
in der ersten Betriebsphase (25) das Verbrennungsabgas der katalytischen Brennereinrichtung (11a, 11b, 11c) durch den Verdampfer (2) und/oder durch Heizkanäle der Membran (6) hindurchgeleitet wird.

5. Verfahren nach einem der Ansprüche 1 bis 4, weiter
**dadurch gekennzeichnet, daß**
während des Aufheizvorganges der Kohlenwasserstoff bzw. das Kohlenwasserstoffderivat direkt in die katalytische Brennereinrichtung (11a, 11b, 11c) zur katalytischen Verbrennung eingespeist wird.

6. Verfahren nach einem der Ansprüche 1 bis 5, weiter
**dadurch gekennzeichnet, daß**
über wenigstens eine Zwischeneinspeisungsleitung (5, 21) und/oder Brennstoffspeiseleitung (12, 13) Wasser als Wärmetransportmedium und zur Vermeidung von Überhitzungen in den Reformierungsreaktor (1) und/oder in die Wasserstoffabtrennstufe (4) und/oder in die katalytische Brennereinrichtung (11a, 11b, 11c) zudosierbar ist.

7. Verfahren nach einem der Ansprüche 1 bis 6, weiter
**dadurch gekennzeichnet, daß**
bei mehrteiliger Auslegung der katalytischen Brennereinrichtung mit wenigstens einem dem Reformierungsreaktor (1) zugeordneten Brennerteil (11b) und einem dem Verdampfer (2) zugeordneten Brennerteil (11c) das sauerstoffhaltige Gas individuell dem jeweiligen Brennerteil zuführbar ist.

8. Verfahren nach einem der Ansprüche 1 bis 7, weiter
**dadurch gekennzeichnet, daß**
der Verdampfer (2) und der Reformierungsreaktor (1) während des Aufheizvorganges bei einer Temperatur oberhalb der Normalbetriebstemperatur betrieben werden.

9. Verfahren zum Betrieb eines einen Kühlkreislauf aufweisenden Brennstoffzellensystems, bei dem
- den Brennstoffzellen der von einer Anlage zur Wasserdampfreformierung eines Kohlenwasserstoffs oder Kohlenwasserstoffderivats erzeugte Wasserstoff zugeführt wird,
**dadurch gekennzeichnet, daß**
- der Wasserstoff für die Brennstoffzellen von einer nach dem Verfahren gemäß einer der Ansprüche 1 bis 8 betriebenen Wasserdampfreformierungsanlage erzeugt und das Verbrennungsabgas von deren katalytischer Brennereinrichtung (11a, 11b, 11c) zum Aufheizen des Kühlkreislaufs des Brennstoffzellensystems verwendet wird.

10. Anlage zur Wasserdampfreformierung eines Kohlenwasserstoffs, insbesondere zum Betrieb gemäß dem Verfahren nach einem der Ansprüche 1 bis 8, mit
- einem sowohl für POX-Betrieb als auch Reformierungsbetrieb geeigneten Reformierungsreaktor (1),
- einem dem Reformierungsreaktor (1) vorgeschalteten Verdampfer (2) mit zugehöriger Dosiereinrichtung (3),
- einer dem Reformierungsreaktor nachgeschalteten Wasserstoffabtrennstufe (4) und
- einer katalytischen Brennereinrichtung (11a, 11b, 11c),
**dadurch gekennzeichnet, daß**
- ein erster Teil (11b) der katalytischen Brennereinrichtung mit dem Reformierungsreaktor (1) und ein zweiter Teil (11c) derselben mit dem Verdampfer (2) über eine jeweilige wärmeleitende Trennwand (16, 17) in Wärmekontakt stehen und
- Mittel zum Betreiben des Reformierungsreaktors (1) bei einem Kaltstart während eines anfänglichen Aufheizvorganges in einer ersten Betriebsphase im POX-Betrieb mit niedrigerem Aufheizbetriebsdruck und zum Umschalten auf Reformierungsbetrieb in einer zweiten Betriebsphase mit auf den höheren Normalbetriebsdruck des anschließenden Normalbetriebs steigendem Druck vorgesehen sind, wobei diese Mittel wenigstens eine Luft/Kohlenwasserstoff-Zwischeneinspeisungsleitung (21) stromaufwärts des Reformierungsreaktors (1) und ein Druckhalteventil (18) stromabwärts der Wasserstoffabtrennstufe (4) beinhalten.

11. Anlage nach Anspruch 10, weiter
**gekennzeichnet durch**
eine Luft/Kohlenwasserstoff-Zwischeneinspeisungsleitung (5) stromabwärts des Reformierungsreaktors (1) und stromaufwärts der Wasserstoffabtrennstufe (4).

12. Anlage nach Anspruch 10 oder 11, weiter
**dadurch gekennzeichnet, daß**
die Wasserstoffabtrennstufe (4) eine selektiv wasserstoffdurchlässige Membran (6) beinhaltet, die mit durchströmbaren Heizkanälen versehen ist.

## Claims

1. A method of operating an installation for steam reforming of a hydrocarbon or hydrocarbon derivative, having an evaporator (2), a reforming reactor (1) suitable both for POX operation and reforming operation, a hydrogen separation stage (4) with selectively hydrogen-permeable membrane (6) and a catalytic burner device in thermal contact at least with the evaporator and the reforming reactor in each case via a heat-conducting partition wall, in which
- in the case of a heated installation, the hydrocarbon or hydrocarbon derivative is subjected to a steam reforming reaction in the reforming reactor and the hydrogen contained in the reformate gas formed is separated from the remaining reformate gas constituents in the hydrogen separation stage at suitably high normal operating pressure and at suitably high normal operating temperature,
**characterised in that**
- if the installation starts from cold, a heating process is performed, in which the reforming reactor (1) is operated in POX operation for partial oxidation of the hydrocarbon or hydrocarbon derivative in a first operating phase (25) at a heating operating pressure lower than normal operating pressure and the product gas arising is passed into the catalytic burner device (11a, 11b, 11c) via the hydrogen separation stage (4) and there is catalytically combusted by means of an oxygen-containing gas, and in which, in a subsequent second operating phase, the reforming reactor is switched over to reforming operation and the pressure is raised from the heating operating pressure to the normal operating pressure.

2. A method according to claim 1, further **characterised in that** the membrane (6) is heated during the heating process additionally by catalytic combustion, activated in the hydrogen separation stage (4), of at least part of the product gas passed through the latter or by a part (11a) of the catalytic burner device in thermal contact therewith.

3. A method according to claim 1 or claim 2, further **characterised in that** electrically generated heat is supplied briefly to the reforming reactor at the beginning of the first operating phase to initiate POX operation.

4. A method according to one of claims 1 to 3, further **characterised in that**, in the first operating phase (25), the burner gas of the catalytic burner device (11a, 11b, 11c) is passed through the evaporator (2) and/or through heating ducts in the membrane (6).

5. A method according to one of claims 1 to 4, further **characterised in that**, during the heating process, the hydrocarbon or the hydrocarbon derivative is fed directly into the catalytic burner device (11a, 11b, 11c) for catalytic combustion.

6. A method according to one of claims 1 to 5, further **characterised in that** water may be apportioned via at least one intermediate feed line (5, 21) and/or fuel feed line (12, 13) into the reforming reactor (1) and/or the hydrogen separation stage (4) and/or the catalytic burner device (11a, 11b, 11e) as a heat transfer medium and to prevent overheating.

7. A method according to one of claims 1 to 6, further **characterised in that**, if the catalytic burner device is of multipart design, with at least one burner part (11b) associated with the reforming reactor (1) and one burner part (11e) associated with the evaporator (2), the oxygen-containing gas may be supplied individually to the respective burner parts.

8. A method according to one of claims 1 to 7, further **characterised in that** the evaporator (2) and the reforming reactor (1) are operated during the heating process at a temperature above normal operating temperature.

9. A method of operating a fuel cell system comprising a cooling circuit, in which
- the hydrogen produced by an installation for steam reforming of a hydrocarbon or hydrocarbon derivative is supplied to the fuel cells,
**characterised in that**
- the hydrogen for the fuel cells is produced by a steam reforming installation operated by the method according to one of claims 1 to 8 and the burner gas from the catalytic burner device (11a, 11b, 11c) thereof is used to heat the cooling circuit of the fuel cell system.

10. An installation for steam reforming of a hydrocarbon, in particular for operation by the method according to one of claims 1 to 8, having
- a reforming reactor (1) suitable both for POX operation and reforming operation
- an evaporator (2) connected upstream of the reforming reactor (1), with associated metering device (3),
- a hydrogen separation stage (4) connected downstream of the reforming reactor and
- a catalytic burner device (11a, 11b, 11c),
**characterised in that**
- a first part (11b) of the catalytic burner device is in thermal contact with the reforming reactor (1) and a second part (11c) thereof with the evaporator (2) via respective heat-conducting partition walls (16, 17) and
- means are provided for operating the reforming reactor (1), in the event of a cold start, in POX operation at relatively low heating operating pressure during an initial heating process in a first operating phase and for switching it over to reforming operation in a second operating phase with the pressure increasing to the higher normal operating pressure of the subsequent normal operation, wherein these means include at least one air/hydrocarbon intermediate feed line (21) upstream of the reforming reactor (1) and a pressure regulating valve (18) downstream of the hydrogen separation stage (4).

11. An installation according to claim 10, further **characterised by** an air/hydrocarbon intermediate feed line (5) downstream of the reforming reactor (1) and upstream of the hydrogen separation stage (4).

12. An installation according to claim 10 or claim 11, further **characterised in that** the hydrogen separation stage (4) includes a selectively hydrogen-permeable membrane (6), which is provided with heating ducts which may be flowed through.

## Revendications

1. Procédé de fonctionnement d'un dispositif de reformage à la vapeur d'un hydrocarbure ou d'un dérivé d'hydrocarbure utilisant un évaporateur (2), un réacteur de reformage (1) apte à fonctionner aussi bien en mode POX qu'en mode reformage, un étage séparateur d'hydrogène (4) à membrane (6) sélectivement perméable à l'hydrogène et un dispositif de combustion catalytique en contact thermique au moins avec l'évaporateur et le réacteur de reformage via une paroi thermoconductrice, dans le cadre duquel
- dans un dispositif en marche, l'hydrocarbure ou le dérivé d'hydrocarbure subit une réaction de reformage à la vapeur à l'intérieur du réacteur de reformage et l'hydrogène contenu dans le gaz de reformat est séparé des autres constituants du gaz de reformat dans l'étage séparateur d'hydrogène à une pression et à une température de fonctionnement normales convenablement élevées,
**caractérisé en ce que**
- lors du démarrage à froid du dispositif, on procède à une opération de chauffage dans le cadre de laquelle, dans une première phase de fonctionnement (25), le réacteur de reformage (1) fonctionne en mode POX permettant l'oxydation partielle de l'hydrocarbure ou du dérivé d'hydrocarbure à une pression de fonctionnement plus basse en phase de chauffage que la pression de fonctionnement normale, et le gaz de synthèse obtenu est dirigé via l'étage séparateur d'hydrogène (4) vers le dispositif de combustion catalytique (11a, 11b, 11c) pour y être brûlé catalytiquement à l'aide d'un gaz contenant de l'oxygène, et dans le cadre de laquelle, dans une deuxième phase de fonctionnement succédant à la première, le réacteur passe au mode reformage et la pression est relevée, celle-ci passant de la pression de fonctionnement en phase de chauffage à la pression de fonctionnement normale.

2. Procédé selon la revendication 1,
**caractérisé en ce que**
la membrane (6) est, pendant l'opération de chauffage, en plus chauffée par combustion activée catalytiquement dans l'étage séparateur d'hydrogène (4) au moins d'une partie du gaz de synthèse conduit au travers de ce dernier ou par une partie (11a) du dispositif de combustion catalytique en contact thermique avec ladite membrane.

3. Procédé selon la revendication 1 ou 2,
**caractérisé en ce que**
le réacteur de reformage est, au début de la première phase de fonctionnement, alimenté pour une courte durée en chaleur produite électriquement pour l'amorçage du mode POX.

4. Procédé selon l'une des revendications 1 à 3,
**caractérisé en ce que**
dans la première phase de fonctionnement (25), le gaz d'échappement issu du dispositif de combustion catalytique (11a, 11b, 11c) est acheminé à travers l'évaporateur (2) et/ou les canaux de chauffe de la membrane (6).

5. Procédé selon l'une des revendications 1 à 4,
**caractérisé en ce que**
pendant l'opération de chauffage, l'hydrocarbure ou le dérivé d'hydrocarbure est introduit directement dans le dispositif de combustion catalytique (11a, 11b, 11c) en vue de la combustion catalytique.

6. Procédé selon l'une des revendications 1 à 5,
**caractérisé en ce que**
une quantité d'eau définie par dosage peut, par le biais d'au moins un conduit intermédiaire d'alimentation (5, 21) et/ou d'un conduit d'alimentation en combustible (12, 13), être introduite en tant que fluide caloporteur, et afin d'éviter les surchauffes, dans le réacteur de reformage (1) et/ou l'étage séparateur d'hydrogène (4) et/ou le dispositif de combustion catalytique (11a, 11b, 11c).

7. Procédé selon l'une des revendications 1 à 6,
**caractérisé en ce que**
dans le cas d'un dispositif de combustion catalytique constitué de plusieurs parties, avec au moins une partie de brûlage (11b) affectée au réacteur de reformage (1) et une partie de brûlage (11c) affectée à l'évaporateur (2), le gaz contenant de l'oxygène peut être dirigé individuellement vers la partie respective du dispositif de combustion.

8. Procédé selon l'une des revendications 1 à 7,
**caractérisé en ce que**
l'évaporateur (2) et le réacteur de reformage (1) fonctionnent, pendant l'opération de chauffage, à une température supérieure à la température de fonctionnement normale.

9. Procédé de fonctionnement d'un système à piles à combustible présentant un circuit de refroidissement, dans le cadre duquel
- l'hydrogène produit dans un dispositif de reformage à la vapeur d'un hydrocarbure ou d'un dérivé d'hydrocarbure est amené à des piles à combustible
**caractérisé en ce que**
- l'hydrogène destiné aux piles à combustible est produit dans un dispositif de reformage à la vapeur fonctionnant conformément au procédé selon l'une des revendications 1 à 8 et le gaz d'échappement issu de son dispositif de combustion catalytique (11a 11b, 11c) utilisé pour le chauffage du circuit de refroidissement du système à piles à combustible.

10. Dispositif de reformage à la vapeur d'un hydrocarbure, notamment apte à fonctionner conformément au procédé selon l'une des revendications 1 à 8, avec
- un réacteur de reformage (1) apte à fonctionner aussi bien en mode POX qu'en mode de reformage,
- un évaporateur (2) monté en amont du réacteur de reformage (1), équipé d'un dispositif de dosage (3),
- un étage séparateur d'hydrogène (4) monté en aval du réacteur de reformage et
- un dispositif de combustion catalytique (11a, 11b, 11e),
**caractérisé en ce que**
- une première partie (11b) du dispositif de combustion catalytique et le réacteur de reformage (1), et une deuxième partie (11e) dudit dispositif de combustion et l'évaporateur (2) sont respectivement en contact thermique via leur paroi (16, 17) thermoconductrice respective, et **en ce que**
- des moyens sont prévus pour permettre, lors d'un démarrage à froid, pendant une phase initiale de chauffage opérée dans une première phase de fonctionnement, le fonctionnement du réacteur de reformage (1) en mode POX à pression de fonctionnement plus basse en phase de chauffage, et pour permettre, dans une seconde phase de fonctionnement, le passage au mode reformage à une pression croissante jusqu'à atteinte de la pression de fonctionnement normale plus élevée, ces moyens comprenant au moins un conduit intermédiaire d'alimentation (21) en air/hydrocarbure placé en amont du réacteur de reformage (1) et un clapet de maintien de pression (18) placé en aval de l'étage séparateur d'hydrogène (4).

11. Dispositif selon la revendication 10,
**caractérisé par**
un conduit intermédiaire d'alimentation (5) en air/hydrocarbure placé en aval du réacteur de reformage (1) et en amont de l'étage séparateur d'hydrogène (4).

12. Dispositif selon la revendication 10 ou 11,
**caractérisé en ce que**
l'étage séparateur d'hydrogène (4) comprend une membrane (6) sélectivement perméable à l'hydrogène, laquelle est équipée de canaux de chauffe permettant la circulation d'un fluide.
